# EUROPÄISCHE PATENTSCHRIFT

(11) **EP 3 763 803 B1**
(45) Veröffentlichungstag und Bekanntmachung des Hinweises auf die Patenterteilung: **21.10.2026**
(21) Anmeldenummer: 20020310.7
(22) Anmeldetag: 06.07.2020
(51) Int. Cl.: C10B 53/07, C10B 47/20, C10B 57/06

(54) **PYROLYSEREAKTOR UND VERFAHREN ZUR CHEMISCHEN AUFBEREITUNG VON KUNSTSTOFFEN**
PYROLYSIS REACTOR AND METHOD FOR THE CHEMICAL TREATMENT OF PLASTICS
RÉACTEUR DE PYROLYSE ET PROCÉDÉ DE TRAITEMENT CHIMIQUE DE MATIÈRES PLASTIQUES

(30) Priorität: 09.07.2019 DE 102019118560
(43) Veröffentlichungstag der Anmeldung: 13.01.2021
(73) Patentinhaber: Karlsruher Institut für Technologie, 76131 Karlsruhe (DE)
(72) Erfinder: LEIBOLD, Hans, 76227 Karlsruhe (DE); RICHTER, Frank, 66386 Sankt Ingbert (DE); MORGANO, Marco Tomasi, 76133 Karlsruhe (DE)

(56) Entgegenhaltungen:
- WO-A1-2015/194978
- CN-A- 106 433 723
- CN-A- 107 892 931
- US-A1- 2005 167 259
- ELLY HOEKSTRA ET AL: "Fast Pyrolysis of Biomass in a Fluidized Bed Reactor: In Situ Filtering of the Vapors", INDUSTRIAL & ENGINEERING CHEMISTRY RESEARCH, vol. 48, no. 10, 20 May 2009 (2009-05-20), pages 4744 - 4756, XP055013403, ISSN: 0888-5885, DOI: 10.1021/ie8017274

## Beschreibung

Die Erfindung betrifft einen Pyrolysereaktor sowie einem Verfahren zur chemischen Aufbereitung von Kunststoff in weiter verwertbare gas-/dampfförmige und feste Produkte gemäß der Patentansprüche 1 bzw. 9.

Die chemische Aufarbeitung von Kunststoffen erfolgt vorzugsweise mittels Pyrolyse, bei der eine Spaltung von Kunststofffraktionen und Kunststoffgemischen erfolgt, wobei in vorteilhafter Weise weiterverwertbare gas-/dampfförmige Produkte sowie ein fester Rückstand entstehen.

Ein Einsatzgebiet der Pyrolyse umfasst die Aufbereitung von schadstoffhaltigen Kunststoffen. Dabei ist diese Methode jedoch nicht unproblematisch, da dabei neben den gewünschten Kohlenwasserstoffen ein breites Spektrum weiterer giftiger Verbindungen entstehen kann. Beispielsweise bildet Tetrabrombisphenol A beim Pyrolysieren giftige mono- und di-Bromphenole. Andere typische Pyrolyseprodukte sind halogenierte p-Dibenzodioxine (PBDD) und p-Dibenzofurane (PBDF). Dem Vorteil einer Energie- und Wertstoffrückgewinnung steht somit die Toxizität der Pyrolyseprodukte gegenüber.

Davon ausgehend ist aus der DE 102 34 837 A1 ein Verfahren zur Behandlung halogenhaltiger Kunststoffe bekannt, bei dem sich mittels eines Pyrolyseverfahren Wertstoffe und/oder Energie zurückgewinnen lassen und die Abfallstoffe zumindest weitgehend zerstört werden, bei dem jedoch in größerem Ausmaß keine zusätzlichen halogenierten Schadstoffe entstehen. Es umfasst ein Vermischen der halogenhaltigen Abfallstoffe mit einem aufgeschmolzenen, substituierten oder unsubstituierten Polyolefin in einer Inertgasatmosphäre sowie ein Abtrennen des beim Aufschmelzen entstehenden Halogenwasserstoffs.

WO 2015/194978 A1 offenbart eine Vorrichtung sowie ein Verfahren zur thermischen Zersetzung von Abfallkunststoffen und/oder Biomasse.

Davon ausgehend liegt eine **Aufgabe der Erfindung** darin, einen Pyrolysereaktor und ein Verfahren zur chemischen Aufbereitung von Kunststoff oder kunststoffhaltigen Gemischen so zu gestalten, dass eine erhöhte Ausbeute an verwertbaren Pyrolyseprodukten einerseits und zugleich eine vereinfachte und/oder präzisere Verfahrensführung und -kontrolle andererseits realisierbar ist.

Weitere Aufgaben der Erfindung liegen in einer besseren verfahrenstechnischen Beherrschung einer Pyrolyse insbesondere von niedrigschmelzenden Kunststoffen, d. h. Kunststoffe, mit signifikant unter der Pyrolysetemperatur (vorzugsweise zwischen 350 und 650 °C, weiter bevorzugt zwischen 400 und 550 oder 600 °C) liegenden Schmelztemperaturen (je nach Kunststoff vorzugsweise zwischen 50 und 200 °C, weiter bevorzugt zwischen 80 und 150 °C), in einer sorptiven Entfernung von Schadstoffen sowie in einer besseren katalytischen Beeinflussung des Pyrolyseverfahrens sowie der Eigenschaften der erzielbaren Pyrolyseprodukte.

Die Aufgabe wird mit einem Pyrolysereaktor mit den Merkmalen aus Anspruch 1 sowie einem Verfahren mit den Merkmalen aus Anspruch 9 gelöst. Die auf diese bezogenen Unteransprüche geben vorteilhafte Ausgestaltungen wieder.

Eine Lösung der Aufgabe umfasst einen Pyrolysereaktor zur chemischen Aufbereitung von Kunststoff oder kunststoffhaltigen Gemischen. Der Pyrolysereaktor ist vorzugsweise als schwerkraftbetriebener Fließbettreaktor ausgestaltet, der in besonders vorteilhafter Weise für den Vortrieb der zu pyrolysierenden Kunststoffbestandteile außer der Schwerkraft keine weiteren Fördermittel benötigt. Es entsteht im Reaktor eine sog. Pfropfenströmung zu einem unten liegenden Auslass hin.

Eine weitere Lösung der Aufgabe umfasst ein Verfahren zur chemischen Aufbereitung von Kunststoff oder kunststoffhaltigen Gemischen mit dem vorgenannten Pyrolysereaktor. Das Verfahren ist ein kontinuierliches Verfahren, d. h. die Stoffströme bei der Aufbereitung ohne Unterbrechung sind kontinuierlich einstellbar.

Das kunststoffhaltige Gemisch besteht entweder aus einem Gemisch aus mehreren Kunststoffarten, beispielsweise einem Werkstoffverbund, oder einem Gemisch aus mindestens einem Kunststoff und einem weiteren Material, beispielweise einem mit Metall beschichteten Kunststoff.

Der Pyrolysereaktor umfasst ein Reaktorvolumen mit einer Prozesszone für die Aufnahme einer bevorzugt kontinuierlich aufgebbaren Schüttung aus einer Mischung aus dem Kunststoff oder den kunststoffhaltigen Gemischen und einem dispersen Trägermaterial.

Der Kunststoff oder das kunststoffhaltige Gemisch sowie das disperse Trägermaterial werden vor der Eingabe in den Pyrolysereaktor bereitgestellt und miteinander zu einer quasihomogenen (mehrphasig, aber makroskopisch homogenen) Mischung vermischt. Vorzugsweise liegt der bereitgestellte Kunststoff oder das bereitgestellte kunststoffhaltige Gemisch als Ausgangsstoff als Partikel vor, weiter bevorzugt mit einer Partikelgröße, die der des dispersen Trägermaterials entspricht. Danach folgt eine Einleitung der Mischung über einen Einlass in das Reaktionsvolumen des Pyrolysereaktors.

Im Rahmen dieser Anmeldung bildet das Reaktorvolumen das gesamte Innenvolumen des Reaktors, während die Prozesszone im Reaktorvolumen angeordnet das Volumen einnimmt, das mit der zu pyrolysierenden Schüttung füllbar ist und über entsprechende Heizmittel zur Aufheizung der Mischung in der Prozesszone verfügt. Vorzugsweise, aber nicht zwingend, ist die Prozesszone ein Teilvolumen des Reaktionsraums.

Das Reaktorvolumen weist ein oberes und ein unteres Ende auf und wird zwischen den Enden durch eine umlaufende Wandung begrenzt. In das Reaktorvolumen sind abseits, vorzugsweise oberhalb der Prozesszone mindestens ein Einlass, vorzugsweise mehrere Einlässe für die vorgenannte Mischung in das Reaktorvolumen vorgesehen. Ferner weist das Reaktorvolumen mindestens einen Auslass für Feststoffe, insbesondere Pyrolyseprodukte und das disperse Trägermaterial sowie noch nicht pyrolysierte Restmengen an der Mischung aus der Prozesszone am unteren Ende des Reaktorvolumens auf.

Ferner ist mindestens eine bevorzugt fest mit dem Reaktor verbundene poröse Entnahme- und/oder Zugabelanze vorgesehen, die in die Prozesszone hineinragt oder die Prozesszone kreuzt. Eine bevorzugte Ausgestaltung sieht vor, jede der oder zumindest eine der Entnahme- und/oder Zugabelanze jeweils zu einer Lanze zusammenzufassen, die weiter bevorzugt die Prozesszone kreuzt. Die Entnahme- und/ oder Zugabelanzen sind vorzugsweise keramische oder metallische rohrförmige oder kerzenförmige offenporige Filterelemente. Die Entnahme- und/oder Zugabelanzen werden durch die Wandung in die Prozesszone eingeschoben und bilden damit einen Gaseintritt oder Gasaustritt in bzw. aus der Prozesszone.

Eine optionale Ausgestaltung sieht vor, zumindest eine Entnahme- und/oder Zugabelanze zugleich als Heizmittel für die Prozesszone auszugestalten, vorzugsweise als Widerstandsheizelement. Hierzu eignen sich insbesondere elektrisch leitfähige metallische oder keramische (z. B. SiC und andere metallähnliche Carbide wie z. B. ZrC oder TiC oder Nitride wie z. B. TiN oder TaN) rohrförmige Filterelemente, die durch die Prozesszone hindurchgeführt werden und durch direkten Stromdurchgang aufheizbar sind.

Eine alternative Aufheizung umfasst eine Hindurchleitung eines Heizmediums je nach Prozesstemperatur beispielsweise ein Wärmeträgeröl oder eine Salzschmelze durch eine Lanze, wobei in diesem Fall die Lanze nicht porös ausgeführt ist oder eine separate Heizleitung in der Lanze eingesetzt ist.

Ferner lässt sich mit einer Entnahme- und/oder Zugabelanze nicht nur ein Wärmeeintrag, sondern auch ein gasförmiger oder flüssiger Stoffeintrag, vorzugsweise durch ein Reaktionsmittel wie H₂· und/oder einem Inertgas oder auch andere Stoffe wie katalytisch wirkende Substanzen in die Prozesszone realisieren.

Eine weitere optionale Ausgestaltung sieht vor, zumindest eine Entnahme- und/oder Zugabelanze zugleich als Mischelement für die Mischung und die in der Prozesszone entstehenden Pyrolyseprodukte zu nutzen. Vorzugsweise entsteht dabei nicht nur eine quasihomogene Durchmischung der Mischung und der aus dieser entstehenden Pyrolyseprodukte, sondern auch eine homogene Temperaturverteilung über den Querschnitt der Prozesszone.

Es ist vorgesehen, die Prozesszone in mindestens zwei, bevorzugt drei bis fünf seriell übereinander angeordnete und vorzugsweise horizontal sich über den Querschnitt der Prozesszone erstreckenden Prozessteilzonen aufzuteilen, wobei jede dieser Prozessteilzonen zumindest je ein Heizmittel aufweist. Wesentlich ist dabei, dass in jeder dieser Prozessteilzonen eine eigene Entnahme- und/oder Zugabelanze mit jeweils einem Gasauslass angeordnet ist, die in je eine Prozessteilzone hineinragen oder die Prozesszone kreuzen und eigene Heizmittel aufweisen. Jeder dieser Maßnahmen verbessert die Einstellung der Pyrolysebedingungen in jeder Prozessteilzone selektive mittels einer jeweils in eine Prozessteilzone einbringbare Heizleistung und/oder Zufuhr von Gasen oder katalytische Mittel (Höhenschichtung der Aufbereitung der festen Halbprodukte und der Ableitung von gasförmigen Halbprodukten einer Pyrolyse). Dies erfolgt entweder durch Einleitung eines Katalysators durch die Zugabelanze oder durch eine Ausgestaltung der Zugabelanze selbst aus einem katalytischen Material. Andererseits sind die in der jeweiligen Prozessteilzone entstehenden flüssigen und/oder gasförmigen Pyrolyseprodukte direkt mit der Entnahmelanze abführbar. Durch die auf je eine Prozessteilzone konzentrierenden Heizmittel ist in jeder Prozessteilzone eine individuelle Temperaturbeeinflussung realisierbar, wobei die Mischelemente wie zuvor beschrieben eine homogene Temperaturverteilung über den Querschnitt der Prozesszone ermöglichen.

Das disperse Trägermaterial besteht vorzugsweise aus einem mineralischen, keramischen oder metallischen Material, d. h. es verhält sich während einer ablaufenden Pyrolyse anders als der Kunststoff oder das kunststoffhaltige Gemisch, vorzugweise intert. Das disperse Trägermaterial besteht vorzugsweise aus Sand. Es dient als Träger für die zu pyrolysierenden Stoffe. Die Partikel des Trägermaterials weisen eine bevorzugte homogene Partikelgröße zwischen 100nm und 5mm, weiter bevorzugt zwischen 10 und 1000 µm auf, wobei mit abnehmender Partikelgröße die spezifische Oberfläche zunimmt und in vorteilhafter Weise bei Erhitzung und vor Erreichung der Pyrolysetemperatur sowohl als Benetzungsfläche als auch als Wärmeübertragungsfläche für den schmelzenden Kunststoff oder Kunststoffbestandteile dient. Eine Benetzung der schmelzenden Kunststoffe oder Kunststoffbestandteile auf dem Trägermaterial bewirkt in vorteilhafter Weise eine Anbindung auf eine vorzugsweise homogen verteilte Trägermaterialoberfläche und behindert damit nicht nur die Mobilität sondern auch lokale Konzentrationen von flüssigen Kunststoffbestandteilen in der quasihomogenen Mischung. Ebenso wird durch zunehmende Benetzung der Kunststoffbestandteile an die Trägermaterialpartikel einer Verschmelzung oder Verklebung der Mischung bis hin zu einem Monoblock entgegengewirkt und damit eine bessere Durchmischbarkeit der Mischung gefördert.

Das disperse Trägermaterial wird im genannten Zusammenhang vorzugsweise gemeinsam mit dem zu pyrolysierenden Kunststoff oder Kunststoffbestandteilen gemischt, dann als quasihomogene Mischung in den Pyrolysereaktor eingebracht und dort als Mischung aufgeheizt. Das disperse Trägermaterial dient daher der Anbindung der Kunststoffbestandteile, damit der Vermeidung von lokalen Kunststoffkonzentrationspeaks in der Mischung und im Gegensatz zu gängigen Pyrolyseverfahren gerade nicht der Aufheizung der zu pyrolysierenden Kunststoff oder Kunststoffbestandteile. Eine zunehmende spezifische Oberfläche des dispersen Trägermaterials bewirkt dennoch eine bessere Wärmeübertragung zwischen den Partikeln des Trägermaterials und dem auf diesen aufschmelzenden Kunststoffbestandteilen und damit eine gleichmäßigere Temperaturverteilung und -übertragung insbesondere innerhalb der Prozessteilzonen.

Eine weitere Ausgestaltung sieht anstelle eines interten Trägermaterials einen auf den Kunststoff sorptiv und/oder auf die Pyrolyse katalytisch wirkenden Feststoff als Trägermaterial vor.

Der Anteil des Trägermaterials in der quasihomogenen Mischung beträgt vorzugsweise zwischen 30 und 60 Gew.-%, vorzugsweise zwischen 35 und 50 Gew.-% bezogen auf die quasihomogene Mischung. Dabei sind höhere Anteile dann von Vorteil, wenn das Trägermaterial eine höhere Dichte als die zu pyrolysierenden Bestandteile aufweist, somit der Mischung eine höhere Dichte zukommen lässt und somit den schwerkraftbetriebenen Vorschub der Mischung in der Prozesszone unterstützt.

Ein weiterer Ansatz für eine weitere Erhöhung der spezifischen Oberfläche der Trägermaterialpartikel besteht in der Verwendung von offenporigen Trägermaterialpartikeln, wobei die offene Porosität einen Teil des aufschmelzenden Kunststoffs bis zum Einsetzen der Pyrolyse in seinen Poren aufnimmt. Bevorzugt weisen Trägermaterialpartikel dabei eine offene Porosität von oberhalb 50%, vorzugsweise über 60% oder gar 75% auf, sodass bei der Einmischung eine Mischung von pastöser oder gar feuchtkrümeliger Konsistenz und mit einem sehr hohen Flüssigphasenanteil oberhalb 50, 60 bzw. bis 75% entsteht.

Eine derartige Einmischung ist grundsätzlich dann abgeschlossen, wenn die Porosität keine weitere flüssige Phase mehr aufnimmt. Insofern kann die Sedimentationsdichte in der Mischung auch erst nach einer gewissen Zeit eingestellt oder überschritten werden. Die lässt sich aber beispielsweise durch eine Größenbegrenzung der Trägermaterialpartikel (z. B. auf 300 µm) gewährleisten. Auch Dispergierungsmittel (z. B. Tenside) können als weitere Option hierfür zur Anwendung kommen. Eine feuchtkrümelige Konsistenz entsteht dann, wenn die flüssige Phase vollständig in den Poren eingelagert ist nur eine gewisse Restfeuchtigkeit auf den Partikeloberflächen der Trägermaterialpartikel zurückbleibt.

Die Wandung des Reaktorvolumens ist vorzugsweise einschichtig und abseits von Öffnungen, insbesondere des mindestens einen Einlasses, des mindestens einen Auslasses und der mindestens einen Entnahme- und/oder Zugabelanze durch die Wandung vorzugsweise gasdicht gegen die Umgebung abgeschlossen.

Eine alternative Gestaltung der Wandung sieht einen mehrschichtigen Aufbau mit zusätzlichen Flächen auf der Reaktorvolumeninnenseite vor, z. B. Heizflächen, Hitzeschutzschichten, Katalysatorschichten oder poröse Filterschichten:
- Heizflächen sind vorzugweise ein Teil von Heizmitteln, die auf der Innenseite der Wandung zum Reaktorvolumen, vorzugsweise zur Prozesszone ausgerichtet sind und Wärme in die Prozesszone einspeisen. Vorzugsweise sind für jede oder nur ein Teil der Prozessteilzonen eigene und individuell ansteuerbare Heizflächen vorgesehen.
- Hitzeschutzschichten sind vorzugsweise keramische Wärmedämmschichten.
- Katalysatorschichten dienen bevorzugt der Beschleunigung oder Steuerung der Pyrolyse in unmittelbarer Nähe zur Wandung. Damit lässt sich in vorteilhafter Weise auch die Bildung von flüssigen Pyrolysebestandteilen fördern, was wiederum einer Verkrustung dieser Bereiche entgegenwirkt.
- Poröse Filterschichten ermöglichen eine zusätzliche Eingabe und/oder Verteilung von gasförmigen Bestandteilen entlang des Umfangs der Prozesszone und unterstützen damit eine Homogenisierung der Pyrolyse zusätzlich.

Der Pyrolysereaktor ist als schwerkraftbetriebener Fließbettreaktor ausgestaltet, wobei der Einlass, das Reaktorvolumen und der Auslass vorzugsweise entlang einer vertikalen Achse übereinander angeordnet sind. Für den Vortrieb der quasihomogenen Mischung mit den zu pyrolysierenden Kunststoffbestandteilen außer der Schwerkraft keine weiteren Fördermittel benötigt. Das Reaktorvolumen ist folglich feststehend, d. h. es weist keine im Reaktorvolumen angeordneten beweglichen Fördermittel, wie z. B. Schneckenfördermittel auf. Dies begünstigt insbesondere den vorgeschlagenen Einsatz der vorgenannten mineralischen, keramischen oder metallischen Trägermaterialien, die bei einem Einsatz von Fördermitteln mit beweglichen Teilen wie z. B. Bandförderer oder Schneckenförderer unweigerlich einen enormen Verschleiß hervorrufen würden.

Weiter bevorzugt erstreckt sich das Reaktorvolumen vorzugsweise rotationssymmetrisch um die Achse, was eine rotationssymmetrische Ausbildung des Vorschubs speziell der vorgenannten quasihomogenen Mischung in der Prozesszone bewirkt und damit in vorteilhafter Weise auch ein synchrones serielle Durchlaufen aller Prozessteilzonen über den gesamten Prozesszonenquerschnitt überhaupt ermöglicht. Die Verweilzeiten in einer Prozessteilzone sind über den gesamten Prozesszonenquerschnitt möglichst gleich.

Eine besonders vorteilhafte Ausgestaltung sieht eine umlaufende Wandung des Reaktorvolumens insbesondere im Bereich der Prozesszone vor, die zwischen Einlass (oberes Ende) und Auslass (unteres Ende) stets ein Gefälle zum unteren Ende hin aufweist. Eine solche Gestaltung vermeidet die Ausbildung von Wandungstaschen und Toträumen und damit von unerwünschten Ablagerungen. Weiter bevorzugt verengt sich die Prozesszone zum Auslass hin trichterförmig.

Zur Lösung der Aufgabe wird ferner ein Verfahren zur chemischen Aufbereitung von Kunststoff oder kunststoffhaltigen Gemischen bei Verwendung eines vorgenannten Pyrolysereaktors vorgeschlagen. Nach einer Bereitstellung des Kunststoffs, eines dispersen Trägermaterials vorzugsweise in Partikelform und vorzugsweise gleichen Partikelgrössen und des Pyrolysereaktors, erfolgt ein Vermischen des Kunststoffs oder des kunststoffhaltigen Gemischs und einem dispersen Trägermaterial zu einer quasihomogenen Mischung der vorgenannten Art, vorzugsweise noch vor einer Eingabe in den aufgeheizten Pyrolysereaktor. Es folgt eine Einleitung der Mischung über den Einlass in das Reaktionsvolumen des Pyrolysereaktors. Im Reaktionsvolumen erfolgt noch vor Erreichen (d. h. oberhalb) der Prozesszone zunächst eine Erwärmung der Mischung, wobei Kunststoffbestandteile der Mischung deren Erweichungstemperatur überschreiten und es in der Mischung zu lokalen Benetzungen zwischen Kunststoff und dispersen Trägermaterials kommt. Bis zum Erreichen der Prozesszone erfolgt eine weitere Erwärmung der Mischung. Spätestens in der Prozesszone kommt es dann zu einer weiteren Aufheizung bis zu einer der vorgenannten Pyrolysetemperatur, wobei die Kunststoff oder kunststoffhaltigen Gemische zu Pyrolyseprodukte umgesetzt werden, während das Trägermaterial vorzugsweis chemisch unverändert verbleibt. Die quasihomogene Mischung und die Pyrolyseprodukte werden dabei bei gleichzeitiger Entnahme von gas- und/oder dampfförmigen Pyrolyseprodukte über mindestens eine Entnahme- und/oder Zugabelanze weiter durchmischt. Dabei wird die Mischung durch die Prozesszone, vorzugsweise seriell durch die Prozessteilzonen geleitet und anschließend feste und/oder flüssige Pyrolyseprodukte und des dispersen Trägermaterials aus der Prozesszone am unteren Ende des Reaktorvolumens entnommen.

Die Erfindung weist nur in einer Ausführungsform mechanisch bewegliche Fördermittel, wie z. B. einen Schneckenförderer auf, mit den vorgenannten Nachteilen bei einer Verwendung von keramischen oder metallischen Trägermaterialien. Eine Ausgestaltung sieht daher vor, den Reaktor horizontal, mit mechanischer Fördereinrichtung wie beispielsweise Schnecke, die den gesamten Reaktorquerschnitt ausfüllt. Eine alternative Ausgestaltung sieht einen Reaktor vorzugsweise in senkrechter Anordnung vor, bei dem der interne Materialtransport beispielsweise durch Schwerkraft und externe Transporthilfsmittel gemeinsam realisiert wird, sodass eine sogenannte Pfropfenströmung entsteht.

Die Lösung umfasst ferner auch Verwendungen eines Pyrolysereaktors mit den vorgenannten Merkmalen und insbesondere für die Aufbereitung von Kunststoffen oder kunststoffhaltigen Stoffen.

Die Lösung umfasst folglich auch eine Pyrolyse von Kunststoffen und Kunststoffabfällen bei einheitlicher oder zonal gestufter Temperatur unter Nutzung eines dispergierten Feststoffes (quasihomogenen Mischung), der im Schmelz-/Reaktionsbereich des Kunststoffes oder Kunststoffgemisches fest ist. Das dabei entstehende gas-/dampfförmige Produkt wird partikelfrei über Hochtemperaturfilter über eine Entnahmelanze abgezogen. Dabei werden schmelzende und nicht schmelzende Kunststoffe gemeinsam mit organischen und anorganischen Abfallbeimengungen pyrolysiert.

Die Erfindung wird anhand von weiteren Ausführungsbeispielen, den folgenden Figuren und Beschreibungen näher erläutert. Alle dargestellten Merkmale und deren Kombinationen sind nicht nur auf diese Ausführungsbeispiele und deren Ausgestaltungen begrenzt. Vielmehr sollen diese stellvertretend für weitere mögliche, aber nicht explizit als Ausführungsbeispiele dargestellte weitere Ausgestaltungen kombinierbar angesehen werden. Es zeigen
**Fig.1** eine prinzipielle Schnittdarstellung des Pyrolysereaktors mit drei Prozessteilzonen sowie
**Fig.2** ein Ablaufschema eines Verfahrens zur chemischen Aufbereitung von Kunststoff oder kunststoffhaltigen Gemischen bei Verwendung eines Pyrolysereaktors nach **Fig.1****.**

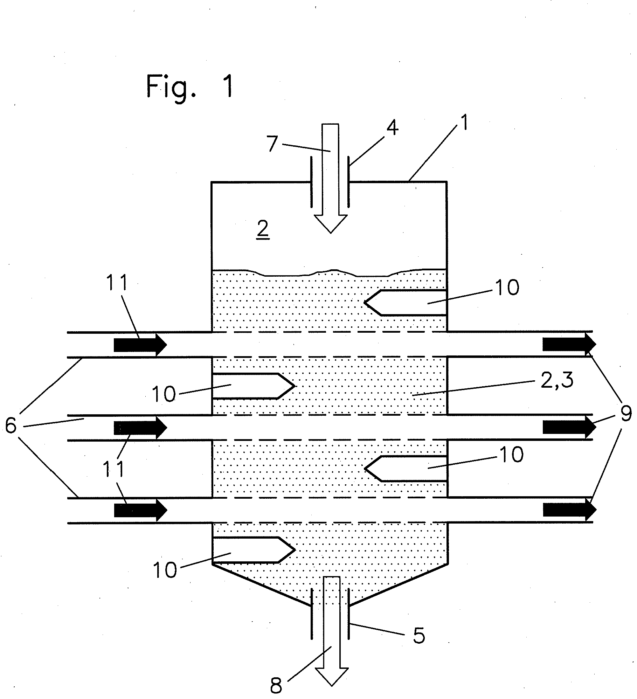

Der im Ausführungsbeispiel nach **Fig.1** dargestellte Pyrolysereaktor weist ein Gehäuse **1** auf, das ein Reaktorvolumen **2** mit einer Prozesszone **3** umschließt. Ein das Reaktorvolumen mündet am oberen Ende ein Einlass **4** ein und am unteren trichterförmig auslaufenden Ende ein Auslass **5** aus. Ferner weist der Pyrolysereaktor mehrere, im Beispiel drei übereinander angeordnete rohrförmige Entnahme- und Zugabelanzen **6** auf, die die Prozesszone in verschiedenen Schichtungen durchdringen und im Bereich der Prozesszone offenporig sind. Die Schichtungen bilden die Teilprozesszonen, die sich jeweils über den gesamten Querschnitt des Reaktorvolumens erstrecken und von der Mischung und den in der Prozesszone entstehenden festen Pyrolyseprodukten hin zum Auslass kontinuierlich durchlaufen werden. Folglich sind der über den Einlass 4 in das Reaktorvolumen geleitete Einspeisemassenstrom **7** wie auch am Auslass **5** abgeleitete Produktmassenstrom **8** wie auch die aus der Entnahmelanze entnehmbare gas- oder dampfförmige Pyrolyseproduktstrom **9** vorzugsweise kontinuierlich. Vorzugsweise zwischen den Entnahme- und Zugabelanzen **6** und damit vorzugsweise zwischen den Prozessteilzonen ragen separate Mischelemente **10** in die Prozesszone ein und bewirken gemeinsam mit den Entnahme- und Zugabelanzen eine Vermischung der Mischung und den sich bildenden Pyrolyseprodukte in der Prozesszone.

Im dargestellten Beispiel sind die Entnahme- und Zugabelanzen **6** durch jeweils eine rohrförmige Lanze dargestellt, wobei der Gasauslass (gas- oder dampfförmige Pyrolyseproduktstrom **9)** nach rechts erfolgt, während von links ein vorzugsweise ein bevorzugt inertes Transportgas (Transportgasstrom **11**) durch die Lanze geleitet wird. Die Lanze ist beidseitig offen und an beiden Enden jeweils an eine nicht dargestellte Ventilsteuerung angeschlossen. Die beiden Ventile einer Lanze lassen die Erzeugung eins Unter- oder eines Stauüberdrucks in der Entnahme- und Zugabelanzen **6** im Bereich der Prozesszone **3** zu und steuern so eine Absaugung der gas- und dampfförmigen Pyrolyseprodukte bzw. eine optionale Eingabe eines Gases in die Prozesszone. Die dargestellten Entnahme- und Zugabelanzen **6** sind im Beispiel als Widerstandsheizelemente konzipiert, d. h. sie weisen einen Bereich mit einem erhöhten elektrischen Widerstand auf, der durch den offenporigen Abschnitt in der Prozesszone gebildet wird. Dieser heizt sich bei einem direkten Stromdurchgang selektiv lokal auf. Um eine homogene Heizleistung über den porösen Bereich sicherzustellen, wird eine bevorzugte homogenen Porosität und damit homogene Leitfähigkeit im porösen Bereich eingestellt. Die elektrischen Anschlüsse an den Entnahme- und Zugabelanzen **6** sind nicht weiter dargestellt.

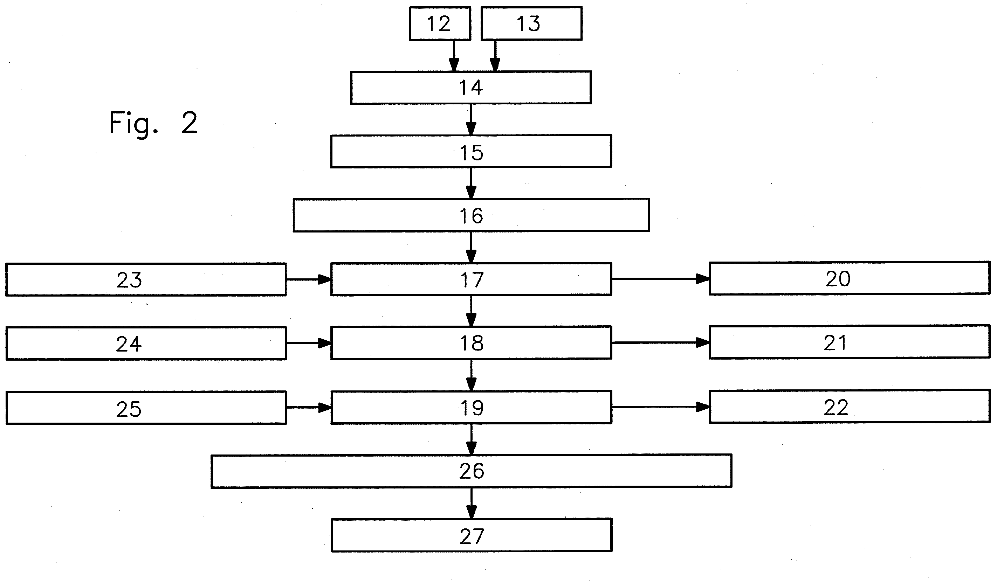

**Fig. 2** gibt ein Ablaufschema eines Verfahrens zur chemischen Aufbereitung von Kunststoff oder kunststoffhaltigen Gemischen bei Verwendung eines Pyrolysereaktors nach **Fig. 1** wieder.

Zunächst erfolgt neben der Bereitstellung eines aufgeheizten Pyrolysereaktors der vorgenannten Art eine Bereitstellung von Sand **12** als dispersen Trägermaterial und kunststoffhaltigen Material **13** als Kunststoff oder kunststoffhaltiges Gemisch, die zu einer homogenisierten Mischung **14** (quasihomogene Mischung der vorgenannten Art) zusammengeführt werden. Es folgt eine Einleitung der Mischung in den Pyrolysereaktor **15** (Dosierung in den Pyrolysereaktor) und eine Aufwärmung auf eine Temperatur oberhalb der Schmelztemperaturen der Kunststoffkomponenten **16** des kunststoffhaltigen Materials **13,** vorzugsweise im Reaktorvolumen über der Prozesszone, spätestens in der Prozesszone. Dabei überschreiten die Kunststoffbestandteile der Mischung deren Erweichungstemperaturen, vorzugsweise auch der Schmelztemperaturen und es in der Mischung zu lokalen Benetzungen zwischen Kunststoff und dispersen Trägermaterials kommt. Es folgt eine serielle Durchleitung mit Pyrolyse der Mischung durch drei Prozessteilzonen **17, 18** und **19** der Prozesszone in drei Ebenen, wobei die Mischung bereits in der ersten Prozessteilzone **17** bis zu einer Überschreitung einer Pyrolysetemperatur vorzugsweise zwischen 350 und 650°C, weiter bevorzugt zwischen 400 und 550 oder 600°C, weiter erwärmt wird. Bei Durchlauf durch die drei Prozessteilzonen **17, 18 und 19** werden die Kunststoff oder kunststoffhaltigen Gemische zu Pyrolyseprodukte umgesetzt und die Mischung und die Pyrolyseprodukte dabei bei gleichzeitiger Entnahme von gas- und/oder dampfförmigen Pyrolyseprodukte **20, 21 und 22** über jeweils mindestens eine Entnahme- und/oder Zugabelanze weiter durchmischt. Gleichzeitig erfolgt ein Wärme- und/ oder Stoffeintrag **23, 24 und 25** (Stoffeintrag ist Eintrag von Sorbentien, weiteren Kunststoff, Katalysatoren und/oder Inertgas) in die drei Prozessteilzonen **17, 18 und 19** der Prozesszone, vorzugsweise wie zuvor beschrieben, über die jeweils mindestens eine Entnahme- und/oder Zugabelanze pro Ebene. Aus der letzten Prozessteilzone **19** der Prozesszone erhält man eine Mischung aus einem Rest von nicht pyrolysierter quasihomogener Mischung und feste und gasförmige Pyrolyseprodukte **26**, und dann als letzten Teilschritt eine Entnahme der Pyrolyseprodukte und des dispersen Trägermaterials aus der Prozesszone am unteren Ende des Reaktorvolumens **27**.

### Bezugszeichenliste:

1 Gehäuse
2 Reaktorvolumen
3 Prozesszone
4 Einlass
5 Auslass
6 Entnahme- und Zugabelanzen
7 Einspeisemassenstrom
8 Produktmassenstrom
9 gas- oder dampfförmige Pyrolyseproduktstrom
10 Mischelemente
11 Transportgasstrom
12 Bereitstellung von Sand
13 Bereitstellung **von** kunststoffhaltigem Material
14 quasihomogene Mischung
15 Dosierung in den Pyrolysereaktor
16 Aufwärmung auf eine Temperatur oberhalb der Schmelztemperaturen der Kunststoffkomponenten
17 Pyrolyse der Mischung durch Prozessteilzone 1
18 Pyrolyse der Mischung durch Prozessteilzone 2
19 Pyrolyse der Mischung durch Prozessteilzone 3
20 Entnahme von gas- und/oder dampfförmigen Pyrolyseprodukte **aus** Prozessteilzone 1
21 Entnahme von gas- und/oder dampfförmigen Pyrolyseprodukte **aus** Prozessteilzone 2
22 Entnahme von gas- und/oder dampfförmigen Pyrolyseprodukte **aus** Prozessteilzone 3
23 Wärme- und/oder Stoffeintrag in Prozessteilzone 1
24 Wärme- und/oder Stoffeintrag in Prozessteilzone 2
25 Wärme- und/oder Stoffeintrag in Prozessteilzone 3
26 Mischung aus einem Rest von nicht pyrolysierter quasihomogener Mischung und feste und gasförmige Pyrolyseprodukte
27 Entnahme der Pyrolyseprodukte und des dispersen Trägermaterials aus der Prozesszone am unteren Ende des Reaktorvolumens **27**

## Patentansprüche

1. Pyrolysereaktor zur chemischen Aufbereitung von Kunststoff oder kunststoffhaltigen Gemischen, umfassend:
a) ein feststehendes Reaktorvolumen **(2)** mit einer Prozesszone **(3)** für eine Aufnahme einer Schüttung aus einer Mischung aus dem Kunststoff oder den kunststoffhaltigen Gemischen und einem dispersen Trägermaterial mit einem oberen Ende und einem unteren Ende und einer dazwischen angeordneten umlaufenden Wandung um das Reaktorvolumen,
b) einen Einlass **(4)** oder mehrere Einlässe für die Mischung am oberen Ende des Reaktorvolumens über der Prozesszone,
c) einen Auslass **(5)** für Pyrolyseprodukte und das disperse Trägermaterial aus der Prozesszone am unteren Ende des Reaktorvolumens sowie
d) mindestens ein in die Prozesszone einwirkendes Heizmittel,
wobei
e) das Reaktorvolumen abseits dem Einlass, dem Auslass sowie den mindestens einen Gasauslass gegen die Umgebung abgeschlossen ist sowie
f) die Prozesszone **(3)** mindestens zwei seriell übereinander angeordnete Prozessteilzonen umfasst, wobei jede dieser Prozessteilzonen zumindest je ein Heizmittel aufweist,
**dadurch gekennzeichnet, dass**
g) mindestens eine fest mit dem Reaktor verbundene poröse Entnahme- und/oder Zugabelanze **(6),** die in die Prozesszone hineinragt oder die Prozesszone kreuzt,
h) mindestens ein Mischelement **(10)** für die Quervermischung vorgesehen ist
i) in jeder dieser Prozessteilzonen eine eigene Entnahme- und/ oder Zugabelanze **(6)** mit jeweils einem Gasauslass angeordnet ist, die in je eine Prozessteilzone hineinragen oder die Prozesszone kreuzen.

2. Pyrolysereaktor nach Anspruch 1, **dadurch gekennzeichnet, dass** das disperse Trägermaterial aus einem mineralischen, keramischen oder metallischen Material besteht.

3. Pyrolysereaktor nach Anspruch 1 oder 2, **dadurch gekennzeichnet, dass** die mindestens eine Entnahme- und/oder Zugabelanze **(6)** aus einem keramischen oder metallischen Material besteht.

4. Pyrolysereaktor nach einem der vorgenannten Ansprüche, **dadurch gekennzeichnet, dass** das Heizmittel Elemente umfassen, die in die Prozesszone **(3)** hineinragen und diese aus einem elektrisch leitfähigen Werkstoff als Widerstandsheizung umfasst.

5. Pyrolysereaktor nach Anspruch 4, **dadurch gekennzeichnet, dass** die Elemente durch die Entnahme- und/oder Zugabelanzen **(6)** gebildet sind.

6. Pyrolysereaktor nach Anspruch 4 oder 5, **dadurch gekennzeichnet, dass** die Elemente durch die Mischelemente **(10)** gebildet sind.

7. Pyrolysereaktor nach einem der vorgenannten Ansprüche, **dadurch gekennzeichnet, dass** die Wandung Heizmittel aufweist.

8. Pyrolysereaktor nach einem der vorgenannten Ansprüche, **dadurch gekennzeichnet, dass** der Einlass **(4),** das Reaktorvolumen **(2)** und der Auslass **(5)** entlang einer vertikalen Achse übereinander angeordnet sind, wobei das Reaktorvolumen **(2)** vorzugsweise rotationssymmetrisch um die Achse angeordnet ist.

9. Verfahren zur chemischen Aufbereitung von Kunststoff oder kunststoffhaltigen Gemischen bei Verwendung eines Pyrolysereaktors nach einem der vorgenannten Ansprüche, umfassend die folgenden Verfahrensschritte:
a) Bereitstellung des Kunststoffs **(13),** eines dispersen Trägermaterials **(12)** und des Pyrolysereaktors,
b) Vermischen des Kunststoffs **(14)** oder des kunststoffhaltigen Gemischs und einem dispersen Trägermaterial zu einer quasihomogenen Mischung,
c) Aufheizung der Prozesszone **(3)** im Pyrolysereaktor,
d) Einleitung der Mischung über den Einlass in das Reaktionsvolumen des Pyrolysereaktors **(15),**
e) Erwärmung der Mischung oberhalb der Prozesszone **(16),** wobei Kunststoffbestandteile der Mischung deren Erweichungstemperatur überschreiten und es in der Mischung zu lokalen Benetzungen zwischen Kunststoff und dispersen Trägermaterials kommt,
f) Durchleiten der Mischung durch die Prozesszone **(17, 18, 19),** wobei die Mischung bis zu einer Überschreitung einer Pyrolysetemperatur weiter erwärmt wird, wobei der Kunststoff oder die kunststoffhaltigen Gemische zu Pyrolyseprodukte umgesetzt werden sowie
g) Entnahme der Pyrolyseprodukte und des dispersen Trägermaterials aus der Prozesszone am unteren Ende des Reaktorvolumens **(27)**
**dadurch gekennzeichnet, dass**
h) die Mischung und die Pyrolyseprodukte bei gleichzeitiger Entnahme von gas- und/oder dampfförmigen Pyrolyseprodukte **(20, 21, 22)** über mindestens eine Entnahme- und/oder Zugabelanze weiter durchmischt werden
i) die Prozesszone durch mindestens zwei seriell übereinander angeordnete Prozessteilzonen gestaltet ist und die Durchleitung der Mischung seriell durch die Prozessteilzonen erfolgt sowie
j) in jeder dieser Prozessteilzonen eine eigene Entnahme- und/ oder Zugabelanze **(6)** mit jeweils einem Gasauslass angeordnet ist, die in je eine Prozessteilzone hineinragen oder die Prozesszone kreuzen.

10. Verfahren nach Anspruch 9, **dadurch gekennzeichnet, dass** die Prozessteilzonen jeweils durch eigene Heizmittel individuell aufgeheizt werden.

## Claims

1. Pyrolysis reactor for the chemical processing of plastic or plastic-containing mixtures, comprising:
a) a fixed reactor volume (2) with a process zone (3) for accommodating a bed comprising a mixture of the plastic or the plastic-containing mixtures and a dispersed carrier material, having an upper end and a lower end and a circumferential wall arranged therebetween surrounding the reactor volume,
b) an inlet (4) or a plurality of inlets for the mixture at the upper end of the reactor volume above the process zone,
c) an outlet (5) for pyrolysis products and the dispersed carrier material from the process zone at the lower end of the reactor volume; and
d) at least one heating means acting within the process zone,
wherein
e) the reactor volume, apart from the inlet, the outlet and the at least one gas outlet, is sealed off from the environment; and
f) the process zone (3) comprises at least two process sub-zones arranged in series one above the other, each of these process sub-zones having at least one heating means,
**characterised in that**
g) at least one porous extraction and/or feed lance (6) is provided, being fixedly connected to the reactor and projecting into the process zone or crossing the process zone,
h) at least one mixing element (10) is provided for cross-mixing,
(i) in each of these process sub-zones, a separate extraction and/or feed lance (6) is arranged, each having a gas outlet and projecting into the process sub-zone or crossing the process zone.

2. Pyrolysis reactor according to claim 1, **characterised in that** the dispersed carrier material consists of a mineral, ceramic or metallic material.

3. Pyrolysis reactor according to claim 1 or 2, **characterised in that** the at least one extraction and/or feed lance (6) consists of a ceramic or metallic material.

4. Pyrolysis reactor according to any of the preceding claims, **characterised in that** the heating means comprises elements which project into the process zone (3) and is made of an electrically conductive material as resistance heating.

5. Pyrolysis reactor according to claim 4, **characterised in that** the elements are formed by the extraction and/or feed lances (6).

6. Pyrolysis reactor according to claim 4 or 5, **characterised in that** the elements are formed by the mixing elements (10).

7. Pyrolysis reactor according to any of the preceding claims, **characterised in that** the wall comprises heating means.

8. Pyrolysis reactor according to any of the preceding claims, **characterised in that** the inlet (4), the reactor volume (2) and the outlet (5) are arranged one above the other along a vertical axis, the reactor volume (2) being preferably arranged in a rotationally symmetrical manner about the axis.

9. Method for the chemical processing of plastics or plastic-containing mixtures using a pyrolysis reactor according to any of the preceding claims, comprising the following method steps:
a) Providing the plastic (13), a dispersed carrier material (12) and the pyrolysis reactor,
b) Mixing the plastic (14) or the plastic-containing mixture with a dispersed carrier material to form a quasi-homogeneous mixture,
c) Heating the process zone (3) in the pyrolysis reactor,
d) Feeding the mixture via the inlet into the reaction volume of the pyrolysis reactor (15),
e) Heating the mixture above the process zone (16), wherein the plastic components of the mixture exceed their softening temperature and local wetting occurs within the mixture between the plastic and the dispersed carrier material,
f) Passing the mixture through the process zone (17, 18, 19), wherein the mixture is further heated until a pyrolysis temperature is exceeded, causing the plastic or the plastic-containing mixtures to be converted into pyrolysis products, and
g) Removing the pyrolysis products and the dispersed carrier material from the process zone at the lower end of the reactor volume (27)
**characterised in that**
h) the mixture and the pyrolysis products are further mixed while simultaneously extracting gaseous and/or vaporous pyrolysis products (20, 21, 22) via at least one extraction and/or feed lance,
i) the process zone is configured as at least two process sub-zones arranged in series one above the other, and the mixture is passed through the process sub-zones in series, and
j) in each of these process sub-zones, a separate extraction and/or feed lance (6) is arranged, each having a gas outlet and projecting into the process sub-zone or crossing the process zone.

10. Method according to claim 9, **characterised in that** the process sub-zones are each heated individually by their own heating means.

## Revendications

1. Réacteur de pyrolyse pour le traitement chimique de la matière plastique ou de mélanges contenant de la matière plastique, comprenant :
a) un volume (2) de réacteur ayant une zone (3) opératoire pour une réception d'un amas composé d'un mélange de la matière plastique ou des mélanges contenant de la matière plastique et d'un matériau dispersé de support ayant une extrémité supérieure et une extrémité inférieure et une paroi disposée entre elles en faisant le tour du volume du réacteur,
b) une entrée (4) ou plusieurs entrées pour le mélange à l'extrémité supérieure du volume du réacteur au-dessus de la zone opératoire,
c) une sortie (5) pour du produit de pyrolyse et le matériau dispersé de support de la zone opératoire à l'extrémité inférieure du volume du réacteur ainsi que
d) au moins un moyen de chauffage agissant dans la zone opératoire, dans lequel
e) le volume du réacteur est fermé par rapport à l'environnement à part l'entrée, la sortie ainsi que la au moins une sortie de gaz ainsi que
f) la zone (3) opératoire comprend au moins deux zones opératoires partielles disposées en série l'une au-dessus de l'autre, chacune de ces zones opératoires partielles ayant au moins respectivement un moyen de chauffage,
**caractérisé en ce que**
g) au moins une lance (6) poreuse de prélèvement et/ou d'addition est reliée au réacteur et pénètre dans la zone opératoire ou croise la zone opératoire,
h) il est prévu au moins un élément (10) de mélange pour le mélange transversal
i) dans chacune de ces zones opératoires partielles, est disposée une propre lance (6) de prélèvement et/ou d'addition ayant respectivement une sortie pour du gaz, qui pénètre dans respectivement une zone opératoire partielle ou croise la zone opératoire.

2. Réacteur de pyrolyse suivant la revendication 1, **caractérisé en ce que** le matériau dispersé de support est en un matériau minéral, céramique ou métallique.

3. Réacteur de pyrolyse suivant la revendication 1 ou 2, **caractérisé en ce que** la au moins une lance (6) de prélèvement et/ou d'addition est en un matériau céramique ou métallique.

4. Réacteur de pyrolyse suivant l'une des revendications précédentes, **caractérisé en ce que** le moyen de chauffage comprend des éléments, qui pénètrent dans la zone (3) opératoire et entourent celle-ci d'un matériau conducteur de l'électricité comme chauffage par résistance.

5. Réacteur de pyrolyse suivant la revendication 4, **caractérisé en ce que** les éléments sont formés par les lances (6) de prélèvement et/ou d'addition.

6. Réacteur de pyrolyse suivant la revendication 4 ou 5, **caractérisé en ce que** les éléments sont formés par les éléments (10) de mélange.

7. Réacteur de pyrolyse suivant l'une des revendications précédentes, **caractérisé en ce que** la paroi a un moyen de chauffage.

8. Réacteur de pyrolyse suivant l'une des revendications précédentes, **caractérisé en ce que** l'entré (4), le volume (2) du réacteur et la sortie (5) sont superposés suivant un axe vertical dans lequel le volume (2) du réacteur est, de préférence, de révolution autour de l'axe.

9. Procédé de traitement chimique de la matière plastique ou de mélanges contenant de la matière plastique lors de l'utilisation d'un réacteur de pyrolyse suivant l'une des revendications précédentes, comprenant les stades suivants de procédé :
a) se procurer de la matière plastique (13), un matériau (12) dispersé de support et le réacteur de pyrolyse,
b) mélanger la matière plastique (14) ou le mélange de matière plastique et un matériau dispersé de support en un mélange quasi homogène,
c) chauffer la zone (3) opératoire dans le réacteur de pyrolyse,
d) lancement du mélange par l'entrée dans le volume de réaction du réacteur (15) de pyrolyse,
e) chauffage du mélange au-dessus de la zone (16) opératoire dans lequel des constituants de matière plastique du mélange dépassent leur température de ramollissement et il se produit dans le mélange des mouillages locaux entre matière plastique et matériau dispersé de support,
f) envoi du mélange dans la zone (17, 18, 19) opératoire, dans lequel on continue à chauffer le mélange jusqu'à un dépassement d'une température de pyrolyse, dans lequel on transforme la matière plastique ou les mélanges contenant de la matière plastique en produits de pyrolyse ainsi que
g) prélèvement des produits de pyrolyse et du matériau dispersé de support de la zone opératoire à l'extrémité inférieure du volume (27) du réacteur
**caractérisé en ce que** l'
h) on mélange encore le mélange et les produits de pyrolyse tout en prélevant simultanément du gaz et/ou des produits (20, 21, 22) de pyrolyse sous forme de vapeur par au moins une lance de prélèvement et/ou d'addition
i) la zone opératoire est conformée par au moins deux zones opératoires partielles disposées les unes au-dessus des autres en série et le passage du mélange s'effectue en série dans les zones opératoires partielles ainsi qu'
j) il est disposé dans chacune de ces zones opératoires partielles sa propre lance (6) de prélèvement et/ou d'addition ayant respectivement une sortie pour du gaz, qui pénètrent dans respectivement une zone opératoire partielle ou croisent la zone opératoire.

10. Procédé suivant la revendication 9,
**caractérisé en ce que** l'
on chauffe individuellement les zones opératoires partielles respectivement par leurs propres moyens de chauffage.
